# EUROPÄISCHE PATENTSCHRIFT

(11) **EP 2 608 343 B1**
(45) Veröffentlichungstag und Bekanntmachung des Hinweises auf die Patenterteilung: **13.05.2015**
(21) Anmeldenummer: 11405377.0
(22) Anmeldetag: 23.12.2011
(51) Int. Cl.: H02H 3/33, H02H 3/16

(54) **Stromversorgung**
Power supply
Alimentation électrique

(43) Veröffentlichungstag der Anmeldung: 26.06.2013
(73) Patentinhaber: Brugg Kabel AG, 5200 Brugg (CH)
(72) Erfinder: Steiner, Walter, 4566 Halten (CH)
(74) Vertreter: Stäbler, Roman

(56) Entgegenhaltungen:
- DE-A1- 3 402 028

## Beschreibung

### Technisches Gebiet

Die Erfindung betrifft eine Stromversorgung mit einem Netzanschluss zum Anschliessen an ein Stromversorgungsnetz und einem Verbraucheranschluss zum Anschliessen eines elektrischen Verbrauchers, wobei die Stromversorgung einen ersten Fehlerstromschutzschalter umfasst sowie eine vom Netzanschluss aus gesehen zum ersten Fehlerstromschutzschalter führende erste elektrische Verbindung mit einem Neutralleiter und wenigstens einem Phasenleiter aufweist.

### Stand der Technik

Es gibt unterschiedliche Arten von Niederspannungsnetzen zur Versorgung von daran anschliessbaren Verbrauchern mit elektrischer Energie. Niederspannungsnetze sind üblicherweise dreiphasige Stromversorgungsnetze mit Wechselspannungen im Bereich von 230V/400V (Phase-Neutralleiter bzw. Phase-Phase), wobei die Spannungen auch tiefer oder höher, beispielsweise bis zu 1000V oder 2000V, sein können. Bekannte Arten von solchen Stromversorgungsnetzen sind die TN- Netze mit einem starr geerdeten Sternpunkt und die IT-Netze mit einem ungeerdeten Sternpunkt.

Derartige Systeme werden häufig in Kombination mit einer USV, einer unterbrechungsfreien Stromversorgung, verwendet, damit die angeschlossenen Verbraucher auch bei einem Netzausfall zumindest für eine bestimmte Zeit weiter verwendet werden können. Eine USV ist jedoch nicht zwingend und kann je nach konkreter Anwendung auch entfallen. Um die elektrische Sicherheit von Geräten zu gewährleisten, werden häufig auch FI-Schalter (Fehlerstromschutzschalter) und Leistungsschutzschalter eingesetzt.

Bei solchen IT- bzw. TN-Systemen besteht nun das Problem, dass die FI-Schalter nicht in allen möglichen Situationen korrekt auslösen.

So beispielsweise im Falle eines IT-Netzes bei einem Isolationsfehler zwischen einer Phase und der Erde, etwa wenn eine Person einen Phasenleiter berührt. Hierbei entstehen zwar keine gefährlichen Spannungen an irgendwelchen leitfähigen Gehäusen und auch keine über die Erde geschlossenen Stromkreise zum Transformator. D. h. das IT-Netz kann trotz eines solchen ersten Fehlers weiter betrieben werden. Aus dieser Eigenschaft resultiert eine erhöhte Ausfallsicherheit, was einer der Hauptgründe für den Einsatz von IT-Systemen ist. Aber da eben keine Fehlerströme entstehen, lösen allfällig vorhandene FI-Schalter auch in einem solchen Fehlerfall nicht aus.

Dennoch sollte ein solcher Isolationsfehler natürlich möglichst rasch behoben werden, denn bei den beiden anderen Phasen entsteht eine Spannungsüberhöhung, sodass deren Isolation stark beansprucht wird. Ein weiterer Erdschluss bei einer der beiden anderen Phasen stellt dann einen gefährlichen Kurzschluss dar. Zum Erkennen solcher ersten Isolationsfehler umfassen viele dieser Systeme daher Isolationsüberwachungsgeräte (auch "Iso-Wächter" oder "Isometer" genannt), die permanent den Widerstand der Phasen und des Neutralleiters gegen Erde messen. Wird ein solcher Isolationsfehler festgestellt, wird dieser gemeldet, damit die notwendigen Massnahmen, wie etwa die Abschaltung nicht benötigter Verbraucher oder die Fehlersuche und -behebung, eingeleitet werden können. Im Falle eines TN-Netzes lösen die FI-Schalter korrekt aus, solange das TN-Netz im Netzbetrieb läuft. Fällt jedoch bei einem TN-Netz mit einer USV die Stromversorgung aus, läuft dieses im Batteriebetrieb und die der USV nachgeschalteten Verbraucher sehen ein IT-System. Entsprechend lösen die FI-Schalter bei einem Isolationsfehler wiederum nicht mehr korrekt aus.

Damit allfällig vorhandene FI-Schalter sowohl für TN als auch für IT Netze zuverlässig auslösen, ist aus dem Stand der Technik der Einsatz von Trenntransformatoren bekannt. Mit einem solchen Trenntransformator wird nämlich eine vollständige galvanische Trennung vom Versorgungsnetz erreicht.

Allerdings benötigen solche Trenntransformatoren nicht nur viel Platz und sind schwer, sondern sie sind auch kostspielig.

In der WO 2009/124338 A1; Protectelec PTY LTD ist ein derartiges IT Netz mit einem Trenntrafo offenbart. Zudem wird vorgeschlagen, Schutzvorrichtungen (15, 16) vorzusehen, via welche die einzelnen Stromkreise (11, 12) sekundärseitig an den Trenntrafo anschliessbar sind. Wenn diese Schutzvorrichtungen einen Fehlerstrom des entsprechenden Stromkreises detektieren, trennen sie diesen ab, wodurch der Einsatz von Fl-Schaltern überflüssig wird.

Auch bei dieser Lösung besteht das Problem des vorhandenen Trenntransformators und darüber hinaus ist diese Lösung nicht anwendbar, wenn beispielsweise explizit der Einsatz von Fl-Schaltern gefordert ist.

Die DE 34 02 028 A1 offenbart eine Schutzschaltung, bei welcher auch der Schutzleiter-Stromkreis auf einen Fehlerstrom hin überwacht wird. Um zu verhindern, dass der Schutzschalter in bestimmten Situationen nicht auslöst, wird im Schutzleiter PE eine Drossel mit Eisenkern in Reihe mit der Primärwicklung des Summenstromwandlers angeordnet, wodurch der Kurzschlusswiderstand der Drossel bei geringen Stromstärken erhöht und so eine Blockierung der Schutzschalter-Auslösung verhindert wird.

### Darstellung der Erfindung

Aufgabe der Erfindung ist es, eine dem eingangs genannten technischen Gebiet zugehörende Stromversorgung zu schaffen, welche bei mindestens gleichbleibenden Sicherheitsstandards eine kostengünstige und platzsparende Realisierung erlaubt.

Die Lösung der Aufgabe ist durch die Merkmale des Anspruchs 1 definiert. Die Stromversorgung umfasst einen Netzanschluss zum Anschliessen an ein Stromversorgungsnetz sowie einen Verbraucheranschluss zum Anschliessen eines elektrischen Verbrauchers, wobei selbstverständlich auch mehrere elektrische Verbraucher an den Verbraucheranschluss angeschlossen werden können. Weiter umfasst die Stromversorgung einen ersten Fehlerstromschutzschalter sowie eine erste elektrische Verbindung, welche vom Netzanschluss aus gesehen zum ersten Fehlerstromschutzschalter führt und einen Neutralleiter sowie wenigstens einen Phasenleiter umfasst. Die Stromversorgung ist weiter insbesondere trenntransformatorlos ausgebildet.

Gemäss der Erfindung umfasst die Stromversorgung zur Herstellung einer kapazitiven Verbindung zwischen dem Neutralleiter der ersten elektrischen Verbindung und einem Erdpotential der Stromversorgung eine kapazitive Brücke. Unter dem Begriff Erdpotential der Stromversorgung wird beispielsweise deren Schutzleiter oder ein mit diesem direkt elektrisch leitend verbundenen Element der Stromversorgung verstanden. Der Schutzleiter ist z. B. typischerweise direkt mit einem Erdpotential der Stromversorgung, beispielsweise mit deren geerdeten Gehäuse bzw. einem entsprechenden Potentialausgleich verbunden.

Die Stromversorgung ist insbesondere zum Anschliessen an ein Niederspannungs-Stromversorgungsnetz ausgebildet, d. h. für eine Eingangs-Wechselspannung unter 2000V. Derartige Niederspannungs-Stromversorgungsnetze liefern üblicherweise einen dreiphasigen Drehstrom mit Wechselspannungen im Bereich von 230V/400V und einer Frequenz im Bereich von 50-60 Hz. Es ist möglich, eine Stromversorgung gemäss der Erfindung ebenfalls dreiphasig auszubilden, d. h. sämtliche drei Phasen des Speisenetzes als Eingang für die Stromversorgung zu verwenden und entsprechend am Ausgang einen dreiphasigen Drehstrom für die Verbraucher zur Verfügung zu stellen. Häufig ist dies jedoch nicht erwünscht oder am Installationsort ist lediglich eine der drei Phasen des Speisenetzes vorhanden. Vorzugsweise ist die Stromversorgung daher einphasig ausgebildet, d. h. nur einer der drei Phasenleiter des Speisenetzes wird in die Stromversorgung geführt und sie liefert am Ausgang einen einphasigen Wechselstrom mit einer Wechselspannung im Bereich von 230V (Phase-Neutralleiter).

Aufgrund der erfindungsgemässen kapazitiven Brücke zwischen dem Neutralleiter und dem Erdpotential entsteht im Fehlerfall, d. h. bei einem Isolationsfehler zwischen einem Phasenleiter und der Erde, beispielsweise wenn eine Person einen Phasenleiter berührt, ein für Wechselströme geschlossener Stromkreis. D. h. im Fehlerfall kann durch diese kapazitive Verbindung ein Fehlerstrom fliessen, welcher vom FI-Schalter detektiert wird sodass der FI-Schalter korrekt auslöst.

Durch den Einsatz einer solchen kapazitiven Brücke zwischen dem Neutralleiter und dem Erdpotential löst der FI-Schalter bereits im ersten Fehlerfall korrekt aus. Ein Trenntransformator ist nicht mehr nötig und kann entfallen. Im Gegensatz zum Trenntransformator kann eine kapazitive Verbindung äusserst kompakt und kostengünstig realisiert werden, sodass bei mindestens gleichbleibenden Sicherheitsstandards eine kostengünstige und platzsparende Stromversorgung resultiert.

Auf den Einsatz einer USV kann, wie bereits erwähnt, bei einigen Anwendungen verzichtet werden, auch wenn beispielsweise aus Sicherheitsgründen oder aus sonstigen Gründen ein IT-Netz gewünscht ist. In den meisten Fällen wird jedoch bei einem IT-Netz wie auch bei einem TN-Netz eine USV zum Einsatz kommen, damit z. B. das IT-Netz nicht nur bei einem ersten Isolationsfehler, sondern auch bei einem Netzausfall zumindest für eine bestimmte Zeit weiter verwendet werden kann. Bei einer bevorzugten Ausführungsform der Erfindung umfasst die Stromversorgung daher eine USV, wobei der erste Fehlerstromschutzschalter in diesem Fall auf einer Sekundärseite der USV angeordnet ist. Entsprechend führt die erste elektrische Verbindung, von deren Nullleiter die kapazitive Brücke zum Erdpotential der Stromversorgung abzweigt, von der Sekundärseite der USV zum ersten Fehlerstromschutzschalter.

Bei einer Stromversorgung mit USV muss auf der Primärseite der USV nicht zwingend eine solche kapazitive Brücke vorhanden sein. Bei einer bevorzugten Ausführungsform der Erfindung Ist allerdings primärseitig eine zweite kapazitive Brücke vorhanden, Zwischen dem Netzanschluss und der USV umfasst die Stromversorgung eine zweite elektrische Verbindung mit einem Neutralleiter und wenigstens einem Phasenleiter, wobei diese zweite Brücke zwischen den Neutralleiter der zweiten elektrischen Verbindung und dem Erdpotential der Stromversorgung geschaltet ist und so zwischen diesen Potentialen eine kapazitive Verbindung herstellbar ist. Auch diese Verbindung schliesst im Fehlerfall einen Stromkreis für Wechselströme, sodass ein Fehlerstrom durch diese zweite Brücke abfliessen kann.

Eine solche primärseitige Brücke ist besonders vorteilhaft, wenn - gemäss einer weiteren bevorzugten Ausführungsform der Erfindung - auch USV-primärseitig ein Fehlerstromschutzschafter vorhanden ist. Damit ein solcher primärseitiger Fehlerstromschutzschalter korrekt funktioniert und im Fehlerfall auslöst, ist dieser insbesondere zwischen der zweiten kapazitiven Brücke und der USV angeordnet. Oder mit anderen Worten, die Brücke ist vom Netzanschluss her gesehen vor dem Fehlerstromschutzschalter angeordnet.

Grundsätzlich kann eine kapazitive Verbindung auf verschiedene Arten realisiert werden. So können beispielsweise zwei oder mehr passive Komponenten wie ohmsche Widerstände, Induktivitäten und/oder Kapazitäten derart zusammengeschaltet werden, dass insgesamt ein kapazitiver Widerstand resultiert. Hierbei ist jedoch darauf zu achten, dass der Gleichstromanteil, der durch die Brücke fliesst, möglichst klein bzw. gleich 0 ist, damit dieser Gleichstrom nicht bereits als erster Isolationsfehler erkannt und entsprechend gemeldet wird und somit für einen ordnungsgemässen Betrieb des Netzes beseitigt werden muss.

Um das gewünschte Ziel zu erreichen, nämlich das Fliessen eines kleinen Wechselstroms bei einem Erdschluss eines Phasenleiters, reicht es jedoch aus, wenn jede der vorhandenen kapazitiven Brücken einen kleinen, rein kapazitiven Widerstand aufweist. Bei einem bevorzugten Ausführungsbeispiel der Erfindung ist daher jede der vorhandenen kapazitiven Brücken niederohmig ausgebildet und umfasst ausschliesslich einen rein kapazitiven Widerstand. Jede Brücke umfasst beispielsweise mit Vorteil ausschliesslich eine Kapazität im Bereich von 0.1 µF bis 25 µF, insbesondere im Bereich von 0.33 µF bis 3 µF. Je grösser die Kapazität gewählt wird, desto höher ist der Strom, der durch die Brücke fliessen kann. Der konkret zu wählende Wert hängt folglich auch von den gegebenen Umständen ab. Löst beispielsweise der vorhandene FI-Schalter schon bei einem kleinen Fehlstrom aus, ist die Kapazität eher kleiner zu wählen. Lässt der FI-Schalter jedoch höhere Fehlströme zu, kann auch eine höhere Kapazität verwendet werden. In einem typischen Netz fliesst bei einer Kapazität mit einem solchen Wert genug Strom durch den Erdschluss, beispielsweise eine berührende Person, damit der FI-Schalter sicher und normgerecht auslöst, der Strom aber doch genügend gering ist, um die Verletzungsgefahr für die Person in einem akzeptablen Bereich zu halten. Weiter ist bei Kapazitäten mit einem solchen Wert auch sichergestellt, dass - falls sich mehrere solcher Brücken im selben Netz befinden sollten - der insgesamt fliessende Strom nicht zu hoch wird und so als Isolationsfehler erkannt wird und beseitigt werden muss. Bei den aktuell üblichen IT-Netzen hat sich eine Kapazität im Bereich von 0.5 µF bis 1 µF als besonders vorteilhaft erwiesen.

Bei einem weiteren vorteilhaften Ausführungsbeispiel der Erfindung umfasst jede der Brücken einen Schalter, mit welchem die kapazitive Verbindung zwischen dem jeweiligen Neutralleiter und der Erde herstell- bzw. trennbar ist. Dies ermöglicht es, die Stromversorgung unterschiedlich zu betreiben, beispielsweise als IT Netz, wenn der Schalter geschlossen und so die kapazitive Verbindung hergestellt ist. Wird die Stromversorgung hingegen als TN-Netz betrieben, wird der Schalter geöffnet, da die FI-Schalter in einem TN-Netz mit Netzversorgung, wie oben bereits erwähnt, im Normalbetrieb ohnehin korrekt funktionieren.

Alternativ zu einem Schalter kann die kapazitive Verbindung natürlich auch fix verdrahtet werden. Dies hat jedoch den Nachteil, dass die Stromversorgung nicht mehr derart flexibel betreibbar ist.

Der Schalter kann ein beliebiger Schalter zum Herstellen bzw. Unterbrechen einer elektrischen Verbindung sein. So kommen grundsätzlich sowohl manuell betätigbare Schalter in Frage als auch Schalter, wie etwa Relaisschalter oder auf Transistoren basierte Schalter, welche gesteuert betätigbar sind. Dies gilt grundsätzlich auch für alle anderen Schalter, die im Rahmen dieser Beschreibung erwähnt werden.

Damit die Stromversorgung möglichst flexibel eingesetzt werden kann, umfasst die Stromversorgung mit Vorteil eine Steuerung, mit welcher die Schalter gesteuert werden können. D. h. die Schalter können in Abhängigkeit von bestimmten Kriterien ein- oder ausgeschaltet werden um die kapazitiven Verbindungen je nach Bedarf herzustellen bzw. zu trennen.

Die Steuerung kann hierbei derart ausgebildet sein, dass die Schalter vom Personal bei Bedarf quasi ferngesteuert ein- oder ausgeschaltet werden können. Vorzugsweise ist die Steuerung jedoch derart ausgebildet, dass die Schalter in Abhängigkeit einer Netzstruktur im Eingangsbereich der Stromversorgung gesteuert werden können. Ist eine USV vorhanden, ist mit dem Begriff Eingangsbereich der Bereich auf der Primärseite der USV gemeint und wenn keine USV vorhanden ist, der Abschnitt der Stromversorgung, der Bereich des Netzanschlusses. Ist im Eingangsbereich beispielsweise ein IT Netz vorhanden, können die Schalter vorzugsweise derart angesteuert werden, dass die kapazitiven Verbindungen zwischen dem Neutralleiter und der Erde hergestellt und daher wirksam sind. Ist im Eingangsbereich hingegen ein TN-Netz vorhanden, können die Schalter vorzugsweise derart angesteuert werden, dass die kapazitiven Verbindungen zwischen dem Neutralleiter und der Erde getrennt und damit unwirksam sind. Bei einem solchen TN-Netz ist die Steuerung mit Vorteil zudem derart ausgebildet, dass die kapazitive Verbindung wieder herstellbar ist, wenn die externe Stromversorgung ausfällt und die Stromversorgung im USV-Betrieb läuft. Selbstverständlich kann die Steuerung auch weitere Funktionen übernehmen, beispielsweise um aufgrund des Betriebszustandes der Stromversorgung eine Notabschaltung einzuleiten oder anderweitig auf bestimmte Zustände der Stromversorgung und/oder des speisenden Netzes zu reagieren.

Da die Steuerung die Schalter hierbei in Abhängigkeit der Netzstruktur im Eingangsbereich der Stromversorgung betätigt, muss der Steuerung auf irgendeine Weise bekannt sein, welche Struktur das Netz in diesem Bereich aufweist. Dies kann grundsätzlich wieder geschehen, indem die Steuerung vom Personal mit den entsprechenden Informationen gefüttert wird, beispielsweise durch Betätigung entsprechender Schalter oder auch durch Eingabe entsprechender Daten an einem Bedienterminal der Steuerung. Vorzugsweise umfasst die Steuerung hierfür jedoch einen Detektor, welcher diverse Strom- und/oder Spannungswerte in verschiedenen Leitern der Stromversorgung überwacht und daraus die Netzstruktur im Eingangsbereich bestimmt.

Damit wird der automatische Betrieb der Stromversorgung an einem Stromversorgungsnetz möglich.

Je nach Anforderungen an die Stromversorgung reichen die vorgängig beschriebenen Sicherheitsmassnahmen aus. Zur weiteren Erhöhung der Sicherheit umfasst die Stromversorgung mit Vorteil jedoch weitere Sicherheitsmassnahmen, wie etwa eine oder mehrere Überstromschutzeinrichtungen. Eine solche Überstromschutzeinrichtung kann im Prinzip irgendwo zwischen Netzanschluss und Verbraucheranschluss angeordnet sein. Vorzugsweise ist sie jedoch vom Netzanschluss her gesehen vor dem Fehlerstromschutzschalter angeordnet. Ist eine USV vorhanden, kann eine solche Überstromschutzeinrichtung sowohl auf einer Sekundärseite der USV als auch auf einer Primärseite der USV angeordnet sein, wobei jede Überstromschutzeinrichtung soweit vorhanden vom Netzanschluss her gesehen, insbesondere vor dem jeweiligen FI-Schalter, angeordnet ist. Sind sowohl FI-Schalter als auch Überstromschutzeinrichtung vorhanden, können beide natürlich als selbständige, voneinander getrennte Einheiten ausgebildet sein. Vorzugsweise sind die Überstromschutzeinrichtung und der Fehlerstromschutzschalter als Einheit ausgebildet.

Um die Sicherheit der Stromversorgung, insbesondere in Bezug auf Störungen, die vom Stromversorgungsnetz herrühren, weiter zu erhöhen, umfasst die Stromversorgung zudem mit Vorteil wenigstens eine Überspannungsschutzeinrichtung, welche zwischen dem Netzanschluss und dem Fehlerstromschutzschalter angeordnet ist. Je nach Qualität der Netzversorgung ist eine solche Überspannungsschutzeinrichtung jedoch nicht nötig.

Der Schutzleiter (beispielsweise ein PE-Leiter), d. h. das Erdpotential, ist hierbei vorzugsweise vom Netzanschluss unterbrechungsfrei bis zum Verbraucheranschluss durchgeschleift. Auf diese Weise ist sichergestellt, dass die Stromkreise im Fehlerfall auch tatsächlich geschlossen sind, sodass ein Fehlerstrom fliessen kann, der den bzw. die FI-Schalter auslösen lässt. Wäre der PE-Leiter irgendwo zwischen Netz- und Verbraucheranschluss unterbrochen, könnte eine Fehlfunktion der Stromversorgung die Folge sein.

Damit die Stromversorgung bei unterschiedlichen Stromversorgungsnetzen bzw. in unterschiedlichen Betriebsmodi eingesetzt werden kann, umfasst sie vorzugsweise eine Einstellvorrichtung zum wahlweisen Einstellen einer Netzstruktur im Eingangsbereich der Stromversorgung. Mit dieser Einstellvorrichtung kann beispielsweise eingestellt werden, ob die Stromversorgung primärseitig als IT- oder als TN-Netz funktionieren soll. Diese Einstellvorrichtung kann beispielsweise auch derart ausgebildet sein, dass zusätzlich noch andere Betriebsmodi einstellbar sind. So kann beispielsweise eine Einstellung vorgesehen sein, in welcher die Stromversorgung ausgeschaltet ist, d. h. in welcher entsprechende Schalter im Neutralleiter und den Phasenleitern derart angesteuert werden, dass die Schalter die entsprechenden Leiter unterbrechen. Es kann beispielsweise auch eine Einstellung vorgesehen sein, in welcher die eingangsseitige Netzstruktur automatisch bestimmt, d. h. mit dem vorgängig erwähnten Detektor detektiert wird.

Wie bereits erwähnt, sind IT-Systeme - im Gegensatz zu TN-Systemen - einfehlersicher, d. h. sie können auch bei einem Isolationsfehler, wie etwa dem Berühren eines Phasenleiters durch eine Person, weiter betrieben werden. Erst bei einem weiteren Isolationsfehler können dann gefährliche Kurzschlüsse entstehen.

Damit ein solcher erster Isolationsfehler auch als solcher bemerkt und entsprechend signalisiert werden kann, ist bei einem IT Netz typischerweise eine Isolationsüberwachung vorgesehen. Diese dient, wie der Name schon sagt, zur Überwachung des Systems auf Isolationsfehler, beispielsweise einem Erdschlusses zwischen dem Neutralleiter oder einem der Phasenleiter und dem Erdpotential. Isolationsüberwachungen gibt es in verschiedenen Ausführungen, beispielsweise solche, die auf einer Wechselstrommessung basieren und solche, die auf einer Gleichstrommessung basieren. Eine Isolationsüberwachung mit Wechselstrommessung würde die kapazitive Brücke bei einer Stromversorgung gemäss der Erfindung jedoch als Kurzschluss erkennen und diesen daher unerwünschtermassen als Isolationsfehler signalisieren. Eine erfindungsgemässe Stromversorgung wird daher bevorzugt bei beliebigen TN-Stromversorgungsnetzen oder bei IT-Stromversorgungsnetzen mit einer auf einer Gleichstrommessung basierenden Isolationsüberwachung eingesetzt.

Da solche Iso-Wächter erst bei grösseren Kapazitäten zwischen Nulleiter und Erde ansprechen - üblicherweise erst ab Kapazitäten von 150 µF - können in einer erfindungsgemässen Stromversorgung auch mehrere kapazitive Brücken vorhanden sein, ohne dass diese als Isolationsfehler erkannt und entsprechend signalisiert werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: zeigt eine schematisch dargestellte erfindungsgemässe Stromversorgung;
- Fig. 2: zeigt ein Ausführungsbeispiel einer steuerbaren, kapazitiven Brücke gemäss der Erfindung;
- Fig. 3: zeigt ein weiteres, schematisch dargestelltes Ausführungsbeispiel einer erfindungsgemässen Stromversorgung im Betriebsmodus "IT-Netz";
- Fig. 4: zeigt ein Ausführungsbeispiel einer kapazitiven Brücke für die erfindungsgemässe Stromversorgung aus Fig. 3;
- Fig. 5: zeigt die erfindungsgemässe Stromversorgung aus Fig. 3 im Betriebsmodus "TN-Netz";
- Fig. 6: zeigt die erfindungsgemässe Stromversorgung aus Fig. 3 im Betriebsmodus "Auto"
- Fig. 7: zeigt ein weiteres, schematisch dargestelltes Ausführungsbeispiel einer erfindungsgemässen Stromversorgung und
- Fig. 8: zeigt ein weiteres, schematisch dargestelltes Ausführungsbeispiel einer erfindungsgemässen Stromversorgung ohne USV.

Grundsätzlich sind in den Figuren gleiche Teile mit gleichen Bezugszeichen versehen.

### Wege zur Ausführung der Erfindung

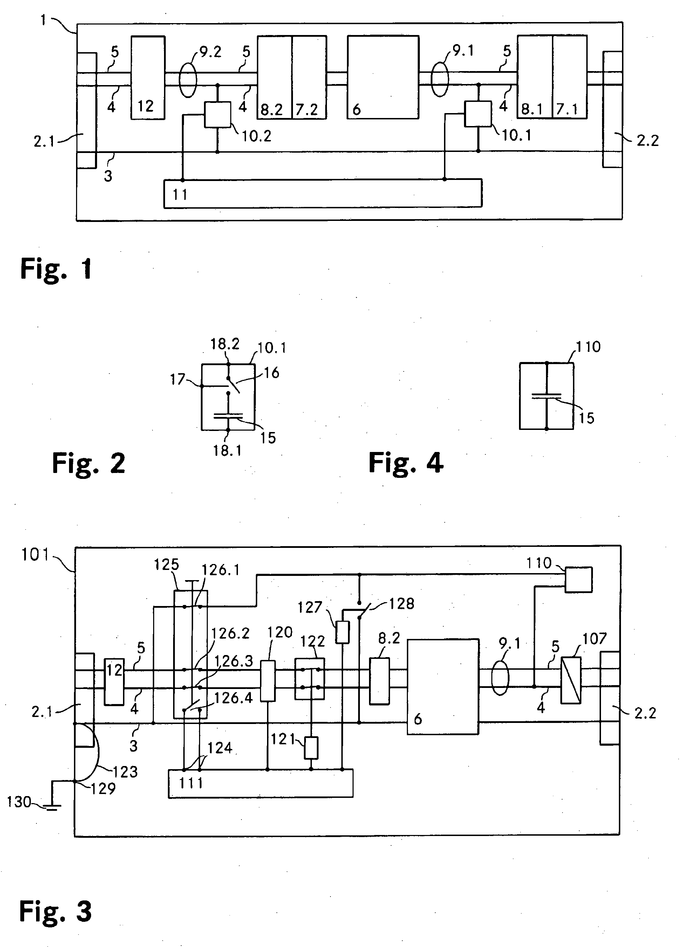

In Fig. 1 ist eine Stromversorgung 1 gemäss der Erfindung dargstellt. Sie umfasst einen Netzanschluss 2.1 sowie einen Verbraucheranschluss 2.2. Ebenfalls dargestellt ist ein vollständig zwischen Netzanschluss 2.1 und Verbraucheranschluss 2.2 durchgeschlaufter Schutzleiter 3, der vorliegend ein PE-Leiter ist. Zudem sind ein Nullleiter 4 und ein Phasenleiter 5 vorhanden, welche mit Unterbrüchen vom Netzanschluss 2.1 zum Verbraucheranschluss 2.2 führen. Im vorliegenden Beispiel ist nur ein Phasenleiter dargestellt. Dem Fachmann ist jedoch klar, dass die Stromversorgung auch mehrphasig ausgebildet sein kann. Die Stromversorgung 1 umfasst eine USV 6 sowie je einen FI-Schalter 7.1, 7.2 auf der Sekundär- bzw. der Primärseite der USV 6. Vom Netzanschluss 2.1 her gesehen ist direkt vor den FI-Schaltern 7.1, 7.2 jeweils eine Überstromschutzeinrichtung in Form eines Leitungsschutzschalters 8.1, 8.2 angeordnet. Je nach Anwendung können natürlich auch andere Schutzeinrichtungen, wie etwa Schmelzsicherungen oder elektronische Sicherungen, eingesetzt werden.

Weiter umfasst die Stromversorgung 1 eine erste und eine zweite kapazitive Brücke 10.1 bzw. 10.2. Die Brücke 10.1 ist zwischen den Schutzleiter 3 und den Neutralleiter des Leitungsstücks 9.1 zwischen der USV 6 und dem Leitungsschutzschalter 8.1 geschaltet und die Brücke 10.2 ist zwischen den Schutzleiter 3 und den Neutralleiter des Leitungsstücks 9.2 zwischen dem Netzanschluss 2.1 und der USV 6 geschaltet. Die Stromversorgung umfasst weiter eine Steuerung 11, welche zur Steuerung der beiden Brücken 10.1, 10.2 dient, wobei diese hierfür mit der Steuerung 11 verbunden sind. Schliesslich umfasst die Stromversorgung 1 noch einen Überspannungsschutz 12 direkt beim Netzanschluss 2.1. Dieser kann in bekannter Art und Weise aus entsprechenden Bauelementen wie Varistoren, Suppressordioden oder Gasableitern bzw. einer Kombination davon aufgebaut sein.

Dem Fachmann ist klar, dass eine Stromversorgung dieser Art weitere Elemente umfassen kann bzw. muss, wobei diese in der vorliegenden schematischen Darstellung der Übersichtlichkeit halber bzw. weil sie ohne Einfluss auf die erfindungsgemässe Ausgestaltung der Stromversorgung sind, weggelassen worden sind.

Fig. 2 zeigt ein Ausführungsbeispiel einer steuerbaren, kapazitiven Brücke 10.1 gemäss der Erfindung, wobei auch die Brücke 10.2 aus Fig. 1 auf diese Weise ausgebildet ist.

Die Brücke 10.1 umfasst eine Kapazität, hier in der Form eines Kondensators 15, welcher eine Kapazität von 0.68 µF aufweist. In Serie mit dem Kondensator 15 ist ein Schalter 16 angeordnet, wobei die Brücke 10.1 zur Steuerung des Schalters 16 einen Steuereingang 17 umfasst. In Fig. 1 ist dieser Steuereingang an die Steuerung 11 angeschlossen, welche das entsprechende Steuersignal liefert. Die Brücke 10.1 umfasst weiter zwei Anschlüsse 18.1, 18.2 welche in der Darstellung gemäss Fig. 1 mit dem Schutzleiter 3 bzw. dem Neutralleiter 4 verbunden sind. Innerhalb der Brücke 10.1 ist der zweite Pol des Kondensators 15 mit dem Anschluss 18.1 und der zweite Pol des Schalters 16 mit dem Anschluss 18.2 verbunden.

Entsprechend wird, wenn der Schalter 16 durch ein entsprechendes Signal am Steuereingang 17 geschlossen wird, eine kapazitive Verbindung zwischen dem Schutzleiter 3 und dem Neutralleiter 4 hergestellt. Wird der Schalter 16 geöffnet, ist diese Verbindung hingegen vollständig getrennt.

Fig. 3 zeigt etwas detaillierter eine weitere Stromversorgung 101 gemäss der Erfindung. Sie umfasst wiederum einen Netzanschluss 2.1 sowie einen Verbraucheranschluss 2.2 und einen zwischen diesen vollständig durchgeschlauften Schutzleiter 3. Zudem sind ein Nullleiter 4 und ein Phasenleiter 5 vorhanden, welche mit Unterbrüchen vom Netzanschluss 2.1 zum Verbraucheranschluss 2.2 führen. Die Stromversorgung 101 umfasst eine USV 6 sowie USV-sekundärseitig ein Modul 107, welches einen FI-Schalter und einen Leitungsschutz kombiniert. Primärseitig ist in diesem Beispiel zwar ein Leitungsschutzschalter 8.2, aber kein FI-Schalter vorgesehen. Hingegen ist beim Netzanschluss 2.1 wiederum ein Überspannungsschutz 12 vorgesehen.

USV-sekundärseitig ist wiederum eine kapazitive Brücke 110 vorgesehen, welche mit ihrem ersten Pol mit dem Neutralleiter 4 des Leitungsstücks 9.1 verbunden ist. Wie in Fig. 4 dargestellt, umfasst die kapazitive Brücke 110 wiederum eine Kapazität 15, im Unterschied zu den Brücken 10.1, 10.2 aus Fig. 1 jedoch keinen integrierten Schalter. Der Wert der Kapazität ist wiederum 0.68 µF. D. h. die Brücke 110 ist nicht direkt mit dem Schutzleiter 3 verbunden, sondern die Zu- bzw. Abschaltung der Brücke 110 erfolgt, wie nachfolgend beschrieben, via externe Schalter. Eine Steuerung 111 ist ebenfalls vorhanden, welche beispielsweise als SPS, d. h. als speicherprogrammierbare Steuerung ausgebildet ist.

Weiter ist eine an die Steuerung 111 angeschlossene Überwachungsvorrichtung 120 dargestellt. Diese überwacht diverse Signale bzw. Werte, wie etwa den Strom in bzw. die Spannung zwischen gewissen Leitern oder auch den Widerstand zwischen bestimmten Punkten. Die Überwachungsvorrichtung 120 umfasst beispielsweise eine Grenzwertüberwachung. Ebenfalls dargestellt ist ein von der Steuerung 111 steuerbares Sicherheitsrelais 121, mit welchem sich unter gewissen Bedingungen die Schalter 122 derart steuern lassen, dass sowohl der Neutralleiter 4 wie auch der Phasenleiter 5 unterbrochen sind. Dies ist beispielsweise der Fall, wenn die Stromversorgung 101 im USV-Betrieb läuft, sei es nun bei intaktem Speisenetz oder bei einem Netzausfall. Oder beispielsweise dann, wenn eine nicht von der Stromversorgung 101 verwendeten Phasen des Speisenetzes einen Erdschluss aufweist, womit zwischen dem Neutralleiter 4 und dem Phasenleiter 5 eine Überspannung entstehen würde. Zudem ist auch ein von der Steuerung 111 steuerbares Schaltrelais 127 dargestellt, mit welchem sich ein Schalter 128 schalten lässt, der in geschlossenem Zustand eine Verbindung zwischen dem Schutzleiter 3 und dem zweiten Pol der Brücke 110 herstellt. Weiter ist erkennbar, dass der Schutzleiter 3 beim Netzanschluss 2.1 über eine galvanisch niederohmsche PE-Verbindung 128 mit dem Gehäuse 129 der Stromversorgung 101 verbunden ist, wobei das Gehäuse (typischerweise ein Ganzmetallgehäuse) bzw. der entsprechende zentrale Erdungspunkt wiederum mit einer Erdung bzw. einem zusätzlichen Potentialausgleich 130 verbunden ist.

Die Stromversorgung 101 weist einen Hauptschalter 125 auf, der im vorliegenden Beispiel mehrere Schalter 126.1, 126.2, 126.3, 126.4 umfasst und in mehrere Stellungen gebracht werden kann. Die einzelnen Schalter können natürlich auch separat voneinander realisiert sein, allerdings reduziert die gemeinsame Realisierung die Gefahr von gegenseitig unverträglichen Schalterstellungen der Schalter untereinander. In jeder der möglichen Stellungen ist jeder der vorhandenen Schalter 126.1, 126.2, 126.3, 126.4 in einer bestimmten Position, d. h. geschlossen oder geöffnet und stellt so eine Verbindung oder einen Unterbruch der daran angeschlossenen Leiter her. Schalter 126.1 ist zwischen den Schutzleiter 3 und den zweiten Pol der Brücke 110 geschaltet. Der Schalter 126.2 ist in den Phasenleiter 5 geschaltet, wobei für den Fachmann klar ist, dass, wenn mehrere Phasenleiter vorhanden wären, der Hauptschalter 125 gegebenenfalls pro Phasenleiter einen Schalter 126.x aufweisen würde. Der Schalter 126.3 ist in den Neutralleiter 4 geschaltet. Schalter 126.4 schliesslich ist in eine Verbindungsleitung über zwei Ein/Ausgängen 124 der Steuerung 111 geschaltet, wobei deren Funktion weiter unten erläutert wird.

Der Hauptschalter 125 dient unter anderem dazu, den Betriebsmodus der Stromversorgung 101 einzustellen. Einer dieser Betriebsmodi ist "Aus", in welchem alle 4 Schalter 126.1, 126.2, 126.3, 126.4 geöffnet sind. Auf diese Weise sind der Neutral- 4 und der Phasenleiter 5 unterbrochen und es erfolgt kein Energiefluss. In allen anderen Betriebsmodi sind die Schalter 126.2 bzw. 126.3 für den Phasenleiter 5 sowie den Neutralleiter 4 immer geschlossen.

Mit dem Schalter 126.1 lässt sich die Stromversorgung 101 zwischen den Betriebsmodi "IT-Netz" und "TN-Netz" umschalten. Die Wahl des Betriebsmodus hängt hauptsächlich davon ab, welche Netzart das speisende Stromversorgungsnetz aufweist. Handelt es sich dabei um ein TN-Netz, d. h. ist der Sternpunkt des speisenden Generators bzw. Transformators geerdet, wird die Stromversorgung 101 typischerweise im "TN-Netz" - Modus betrieben. Handelt es sich hingegen beim speisenden Netz um ein IT-Netz, d. h. beim speisenden Generator bzw. Transformator ist der Sternpunkt nicht geerdet, wird die Stromversorgung 101 typischerweise im "IT-Netz" - Modus betrieben.

Für den Betrieb der Stromversorgung 101 im Modus "IT-Netz" wird der Schalter 126.1 geschlossen, wobei der Hauptschalter 125 derart ausgebildet ist, dass der Schalter 126.4 hierbei geöffnet ist. Dieser Betriebsmodus ist in Fig. 3 dargestellt. In diesem Modus ist durch den geschlossenen Schalter 126.1 die Kapazität 15 der Brücke 110 zwischen den Neutralleiter 4 des Leitungsstücks 9.1 und den Schutzleiter 3 geschaltet.

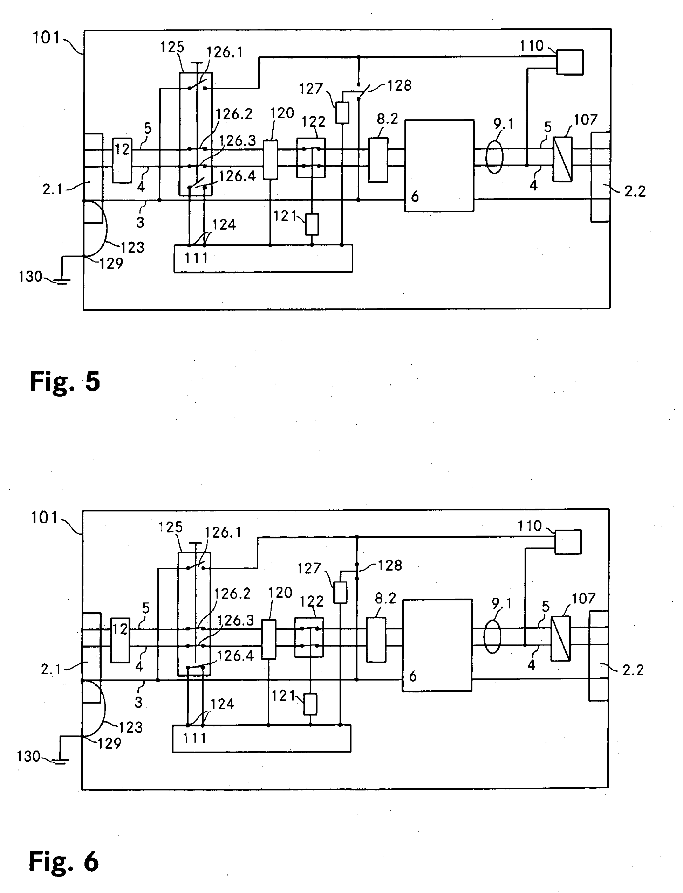

Für den Betrieb der Stromversorgung 101 im Modus "TN-Netz" wird der Schalter 126.1 geöffnet, wobei der Schalter 126.4 auch hierbei geöffnet bleibt. Dieser Betriebsmodus ist in Fig. 5 dargestellt. D. h. durch den geöffneten Schalter 126.1 ist die Kapazität 15 der Brücke 110 nicht zwischen den Neutralleiter 4 des Leitungsstücks 9.1 und den Schutzleiter 3 geschaltet.

Schliesslich kann durch Schliessen des Schalters 126.4 der Betriebsmodus "Auto" eingestellt werden, wobei hierbei der Schalter 126.1 geöffnet bleibt. Dieser Betriebsmodus ist in Fig. 6 dargestellt.

Im Folgenden werden die einzelnen Betriebsmodi mit Verweis auf die zugehörigen Figuren näher erläutert.

Der Betriebsmodus "IT-Netz" wird mit Verweis auf Fig. 3 erläutert. In diesem Modus wird davon ausgegangen, dass die Stromversorgung an ein speisendes IT-Netz angeschlossen ist, bei welchem, wie bereits erwähnt, der Sternpunkt des Generators bzw. Transformators nicht geerdet ist.

Im Normalfall ohne Fehler ist das Speisenetz aktiv und die USV 6 ist betriebsbereit, d. h. sie läuft quasi mit. Am Ausgang der USV 6 ist ein üblicher Wechselstrom, beispielsweise ein 230V Wechselstrom, abgreifbar. Die Brücke 110 stellt via den geschlossenen Schalter 126.1 eine kapazitive Verbindung zwischen dem Neutralleiter 4 und dem Schutzleiter 3 her. Aber da zwischen diesen Leitern keine Potentialdifferenz besteht, fliesst kein Fehlerstrom und der FI-Schalter des Moduls 107 spricht nicht an. Im Fehlerfall jedoch, wenn beispielsweise eine Person den Phasenleiter 5 berührt, fliesst ein kleiner Strom durch die Sekundärwicklung der USV 6 vom Phasenleiter 5 zum Neutralleiter 4, von diesem via die Brücke 110 durch den Schalter 126.1 zum Schutzleiter 3, von diesem sowohl via Erdung des Netzgenerators/Netztransformators bzw. via geerdete Gehäuse 129 zur Erde und zurück zur Person. Aufgrund dieses Fehlerstroms löst hierbei nicht nur der FI-Schalter im Modul 107 korrekt aus, sondern auch eine allfällige Isolationsüberwachung am Ausgang des Netzgenerators/Netztransformators detektiert diesen ersten Fehler und signalisiert ihn entsprechend. In einem anderen Fehlerfall, wenn beispielsweise hinter der USV 6 ein Gehäuseschluss, d. h. ein Kurzschluss zwischen dem Neutralleiter 4 und dem Gehäuse 129 besteht, entsteht ein geschlossener Stromkreis via den Neutralleiter 4 zur Isolationsüberwachung am Ausgang des Netzgenerators/Netztransformators, von dieser zurück via den Schutzleiter und von dort via geerdete Gehäuse 129. Der darin fliessende Fehlerstrom lässt den FI-Schalter, wie natürlich auch die Isolationsüberwachung, ansprechen.

Ist die USV 6 hingegen im Bypass-Betrieb (d. h. Neutralleiter und Phasenleiter sind durch entsprechende Schalter in der USV 6 direkt vom Eingang auf den Ausgang gelegt), entsteht der geschlossene Stromkreis nicht via Sekundärspule der USV 6, sondern via Sekundärspule des Netzgenerators/Netztransformators und dann von dort via Brücke 110, Schalter 126.1, Schutzleiter 3, Erde zurück zur Person. Auch hier sprechen FI-Schalter und Isolationsüberwachung korrekt an.

Läuft die Stromversorgung 101 im USV-Betrieb, d. h. das Speisenetz ist zwar angeschlossen, aber der Eingang der Stromversorgung 101 ist durch die geöffneten Schalter 122 von der USV 6 getrennt, liefert die USV 6 den Ausgangs-Wechselstrom. Die Brücke 110 schafft eine kapazitive Verbindung zwischen dem Neutralleiter 4 und dem Schutzleiter 3, aber da zwischen diesen Leitern keine Potentialdifferenz besteht, fliesst kein Fehlerstrom und der FI-Schalter des Moduls 107 spricht nicht an. Im Fehlerfall, beispielsweise bei einem Erdschluss des Phasenleiters 5, fliesst ein kleiner Strom durch die Sekundärwicklung der USV vom Phasenleiter 5 zum Neutralleiter 4, von diesem via Brücke 110 durch den Schalter 126.1 zum Schutzleiter 3, von diesem sowohl via Erdung des Netzgenerators/Netztransformators bzw. via geerdete Gehäuse 129 zurück zum Erdschluss. Aufgrund dieses Fehlerstroms löst hierbei nicht nur der FI-Schalter im Modul 107 korrekt aus, sondern auch die Isolationsüberwachung am Ausgang des Netzgenerators/Netztransformators detektiert diesen ersten Fehler und signalisiert ihn entsprechend.

Wenn im "IT-Netz" - Modus das Stromversorgungsnetz ausfällt, springt aufgabengemäss die USV 6 ein. Bei einem Erdschluss des Phasenleiters 5 fliesst in diesem Fall ein Strom durch die Sekundärwicklung der USV 6 vom Phasenleiter 5 zum Neutralleiter 4, von diesem via Brücke 110 durch den Schalter 126.1 zum Schutzleiter 3 und von diesem via das geerdete Gehäuse 129 zurück zum Erdschluss. Auch in diesem Fall löst daher der FI-Schalter im Modul 107 korrekt aus. Ähnliches gilt natürlich auch, wenn ein Kurzschluss nicht zur Erde, sondern vom Phasenleiter 5 zum Gehäuse 129 besteht, wobei hier der geschlossene Stromkreis eben via Gehäuse 129 anstatt via Erde zu Stande kommt.

Der Betriebsmodus "TN-Netz" wird mit Verweis auf Fig. 5 erläutert. In diesem Modus wird davon ausgegangen, dass die Stromversorgung an ein speisendes TN-Netz angeschlossen ist, bei welchem wie bereits erwähnt, der Sternpunkt des Generators bzw. Transformators geerdet ist. Das resultierende TN-Netz ist hierbei ein sogenanntes TN-S Netz, da der Neutralleiter und der Schutzleiter vom Netzgenerator/Netztransformator bis durch die Stromversorgung 101 hindurch separat geführt sind.

Für den Betrieb im Modus "TN-Netz" ist der Schalter 126.1 geöffnet. Dieser kann daher nicht mehr dazu verwendet werden, die Brücke 110 mit dem Schutzleiter 3 zu verbinden. Bei Bedarf wird in diesem Modus hierfür daher der Schalter 128 verwendet, der unter bestimmten Umständen von dem durch die Steuerung 111 gesteuerten Schaltrelais 127 betätigt wird.

Im Normalbetrieb ohne Fehler läuft die Stromversorgung 101 mit Netzversorgung und die USV 6 ist betriebsbereit. Die Überwachungsvorrichtung 120 detektiert, dass das TN-Netz im Netzbetrieb läuft. Da in diesem Fall, wie eingangs erwähnt, bei einem Isolationsfehler der FI-Schalter korrekt auslöst, wird keine kapazitive Verbindung zwischen Neutralleiter 4 und Schutzleiter 3 benötigt. Entsprechend öffnet die Steuerung den Schalter 128. Bei einem Erdschluss fliesst in diesem Fall nun ein Fehlerstrom vom Phasenleiter 5 via Sekundärspule der USV 6 und Neutralleiter 4 zurück zum geerdeten Sternpunkt des Netzgenerators/Netztransformators und von dort via Erde bzw. via Schutzleiter und geerdete Gehäuses 129 zurück zum Erdschluss, sodass der FI-Schalter korrekt auslöst.

Läuft die Stromversorgung 101 hingegen im Netzbetrieb, aber die USV 6 ist im Bypass-Betrieb, detektiert die Überwachungsvorrichtung 120 den Netzbetrieb und öffnet entsprechend den Schalter 128. Bei einem Erdschluss des Phasenleiters 5 fliesst dann der Fehlerstrom via Phasenleiter 5 zurück zum Netzgenerator/Netztransformator, via dessen Sekundärspule zu deren geerdeten Sternpunkt und von dort via Erde bzw. via Schutzleiter und das geerdete Gehäuses 129 zurück zum Erdschluss. Auch hier spricht der FI-Schalter korrekt an.

Im USV-Betrieb hingegen würde der FI-Schalter bei einem Isolationsfehler wie eingangs erwähnt nicht mehr korrekt auslösen. Die Überwachungsvorrichtung 120 detektiert nun wiederum, dass die Stromversorgung 101 im USV-Betrieb läuft und entsprechend wird der Schalter 128 von der Steuerung 111 aufgrund des entsprechenden Signals der Überwachungsvorrichtung 120 geschlossen. Dadurch stellt die Brücke 110 eine kapazitive Verbindung zwischen dem Neutralleiter 4 und dem Schutzleiter 3 her, aber da im Normalfall ohne Fehler zwischen diesen Leitern keine Potentialdifferenz besteht, fliesst kein Fehlerstrom und der FI-Schalter des Moduls 107 spricht nicht an. Erst im Fehlerfall, beispielsweise bei einem Erdschluss des Phasenleiters 5, fliesst ein kleiner Strom durch die Sekundärwicklung der USV 6 vom Phasenleiter 5 zum Neutralleiter 4, von diesem via Brücke 110 durch den Schalter 128 zum Schutzleiter 3, von dort sowohl via Erdung des Netzgenerators/Netztransformators bzw. via geerdete Gehäuse 129 zur Erde und zurück zur Person. Damit löst der FI-Schalter im Modul 107 korrekt aus.

Fällt die Stromversorgung aus, würde der FI-Schalter bei einem Isolationsfehler wie eingangs erwähnt nicht mehr korrekt auslösen. Die Überwachungsvorrichtung 120 detektiert nun wiederum, dass die Stromversorgung 101 im USV-Betrieb läuft und entsprechend wird der Schalter 128 von der Steuerung 111 aufgrund des entsprechenden Signals der Überwachungsvorrichtung 120 geschlossen. Bei einem Erdschluss fliesst folglich wiederum ein Fehlerstrom vom Phasenleiter 5 durch die Sekundärwicklung der USV 6 zum Neutralleiter 4, von diesem via Brücke 110 durch den Schalter 128 zum Schutzleiter 3 und von dort via geerdete Gehäuse 129 zur Erde und zurück zur Person. Damit löst der FI-Schalter im Modul 107 korrekt aus. Bei einem Gehäuseschluss ist es ähnlich, nur dass der Fehlerstromkreis nicht via Erde, sondern via Gehäuse 129 geschlossen wird, womit der FI-Schalter wiederum korrekt auslöst.

Der Betriebsmodus "Auto" wird mit Verweis auf Fig. 6 erläutert. Für den Betrieb im Modus "TN-Netz" ist der Schalter 126.4 geschlossen, wobei gleichzeitig Schalter 126.1 geöffnet sein muss. Aufgrund des Kurzschlusses in der Verbindungsleitung über den beiden Ein/Ausgängen 124 der Steuerung 111 erkennt diese den so eingestellten Auto-Modus. Mit Hilfe der Überwachungsvorrichtung 120 kann nun die Art des primärseitig vorliegenden Netzes detektiert werden. Basierend auf der so festgestellten Netzart werden die Schalter und Relais von der Steuerung 111 derart betätigt, dass sie sich in der passenden Stellung befinden.

Zwischen einem IT-Netz und einem TN-Netz gibt es zwei Hauptunterschiede, anhand derer sie sich unterscheiden lassen. Der erste Unterschied besteht wie bereits erwähnt in der Erdung des Sternpunktes des Netzgenerators/Netztransformators und der zweite in der zwischen den Phasen und der Erde anliegenden Spannung. Bei einem TN-Netz ist nämlich der Sternpunkt geerdet und da der Neutraleiter und die Erde miteinander verbunden sind, beträgt die Spannung zwischen den Phasen und der Erde jeweils die volle Netzspannung, im vorliegenden Beispiel also 230V. Bei einem IT-Netz hingegen ist der Sternpunkt nicht geerdet und die Spannung zwischen den Phasen und der Erde ist jeweils deutlich geringer als beim TN-Netz, sie liegt bei einem 230V Netz unter 120V, meist sogar unter 90V. Um die primärseitig angeschlossene Netzart feststellen zu können, muss einerseits daher lediglich festgestellt werden, ob der Sternpunkt des Netzgenerators/Netztransformators geerdet ist oder nicht und andererseits, welche Spannung zwischen der bzw. den Phasenleitern und der Erde anliegt. Bei einer einfachen Ausführungsform der Überwachungsvorrichtung 120 umfasst diese daher eine Spannungsüberwachung und eine Isolationsüberwachung. Der Ausgang der Isolationsüberwachung ist hierbei quasi ein binäres Signal, beispielsweise "1" für "niederohmsche Verbindung zwischen Neutral- und Schutzleiter" bzw. "0" für "hochohmsche Verbindung zwischen Neutral- und Schutzleiter" (wobei die "binären" Werte "0" und "1" typischerweise als analoge Strom- oder Spannungswerte realisiert sind und natürlich auch vertauscht sein können). Umfasst das Speisenetz ohnehin eine Isolationsüberwachung (beispielsweise am Ausgang des Netzgenerators/Netztransformators), muss in der Überwachungsvorrichtung 120 keine zusätzliche Isolationsüberwachung vorgesehen sein, es kann dann direkt das Überwachungsresultat der bereits vorhandenen Isolationsüberwachung zur Steuerung geführt und von dieser verwendet werden. Die Spannungsüberwachung bestimmt die Spannung zwischen Phasenleiter 5 und Schutzleiter 3, konkret, ob diese Spannung über oder unter einem Schwellwert liegt und übermittelt wiederum ein entsprechendes "binäres" Signal an die Steuerung - beispielsweise eine "1", wenn die Spannung über dem Schwellwert liegt bzw. eine "0", wenn sie darunter liegt (wobei die Werte natürlich auch hier vertauscht sein können). Der Schwellwert liegt beispielsweise bei 120V. Diese Spannungsüberwachung kann im Prinzip zusätzlich zu der weiter oben erwähnten Grenzwertüberwachung vorhanden sein. Es ist jedoch sinnvoll, die Überwachung auf Überspannungen und die Schwellwertüberwachung in der Grenzwertüberwachung zu kombinieren.

Die Steuerung kann dann die Netzart einfach anhand dieser "binären" Werte feststellen. Sind beide Werte bei "1", liegt ein TN-Netz vor. Sind beide Werte bei "0", liegt ein IT-Netz vor. Sind beide Werte verschieden voneinander, liegt sozusagen ein unerlaubter Zustand vor, der gewünschtenfalls mit einer entsprechenden Fehlerroutine bearbeitet werden kann.

Anstatt quasi "binäre" Werte an die Steuerung zu übermitteln, könnte die Überwachungseinheit natürlich auch derart ausgebildet sein, dass die reinen Widerstands- bzw. Spannungs-Messwerte an die Steuerung übermittelt und von dieser dann entsprechend verarbeitet würden.

Wird nun beispielsweise festgestellt, dass primärseitig ein IT-Netz vorliegt, wird der Schalter 128 geschlossen (wie dies in Fig. 6 dargestellt ist) sodass die Brücke 110 aktiv und die kapazitive Verbindung zwischen Neutralleiter 4 und Phasenleiter 5 hergestellt ist. Tritt dann einer der vorgängig im Zusammenhang mit dem "IT-Netz" - Modus beschriebenen Fehler ein, reagiert die Stromversorgung 101 genau gleich wie wir dort jeweils beschrieben. D. h. der Fehler wird einerseits jeweils korrekt an der Isolationsüberwachung am Ausgang des Netzgenerators/Netztransformators angezeigt und andererseits löst jeweils der FI-Schalter im Modul 107 korrekt aus.

Wird hingegen festgestellt, dass primärseitig ein TN-Netz vorliegt, wird der Schalter 128 grundsätzlich geöffnet, sodass die Brücke 110 inaktiv ist und somit keine kapazitive Verbindung zwischen Neutralleiter 4 und Phasenleiter 5 hergestellt ist. Tritt dann einer der vorgängig im Zusammenhang mit dem "TN-Netz" - Modus beschriebener Fehler ein, reagiert die Stromversorgung 101 wiederum gleich wir dort jeweils beschrieben. D. h. je nach Fehler und Betriebszustand der Stromversorgung 101 wird der Schalter 128 geschlossen oder bleibt geöffnet, wobei der FI-Schalter im Modul 107 jeweils korrekt auslöst.

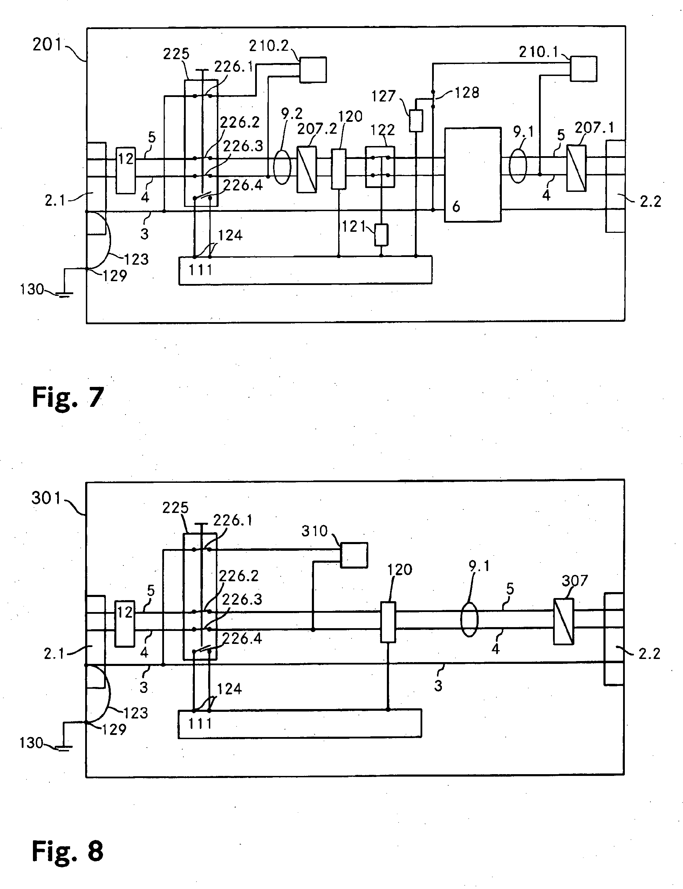

In Fig. 7 ist ein weiteres, schematisch dargestelltes Ausführungsbeispiel einer erfindungsgemässen Stromversorgung 201 dargestellt. Im Gegensatz zu der Stromversorgung 101 aus den vorangegangenen Figuren umfasst die Stromversorgung 201 zusätzlich zu der Brücke 210.1 auf der Sekundärseite der USV 6 eine Brücke 210.2 auf der Primärseite der USV 6. Der Hauptschalter 225 umfasst wiederum mehrere Schalter 226.1, 226.2, 226.3, 226.4. Während die restlichen Schalter 226.2, 226.3, 226.4 gleich verschaltet und angesteuert sind wie bei der Stromversorgung 101, ist der Schalter 226.1 nicht mehr mit der sekundärseitigen Brücke 210.1, sondern mit der primärseitigen Brücke 210.2 verbunden. Entsprechend ist diese Brücke 210.2 im Betriebsmodus "IT-Netz" stets aktiv und im Betriebsmodus "TN-Netz" stets inaktiv, während die Brücke 210.1 nur noch aktiv ist, wenn der Schalter 128 geschlossen ist.

Ein weiterer Unterschied ist das Modul 207.2 auf der Primärseite der USV 6, welches entsprechend dem Modul 207.1 auf der Sekundärseite der USV 6 einen FI-Schalter und einen Leitungsschutz kombiniert.

In Fig. 8 ist eine weitere, schematisch dargestellte, erfindungsgemässe Stromversorgung 301 dargestellt. Die Stromversorgung 301 ist der Stromversorgung 201 aus Fig. 7 sehr ähnlich, umfasst allerdings keine USV. Entsprechend sind auch nur ein FI-Schalter, hier als Modul 307 in Kombination mit einem Leitungsschutz und nur eine kapazitive Brücke 310, vorgesehen. Der in Fig. 7 dargestellte, durch das Schaltrelais 127 geschaltete Schalter 128 fällt daher auch weg. Die Funktion der von der Steuerung 111 gesteuerten Schalter 226.1, 226.2, 226.3, 226.4 des Hauptschalters 225 entspricht jener aus Fig. 7. Zusammenfassend ist festzustellen, dass es die Erfindung erlaubt, eine Stromversorgung für Niederspannungsstromversorgungsnetze bereitzustellen, welche einerseits höchsten Sicherheitsstandards genügt, sodass vorhandene FI-Schalter in den meisten möglichen Fehlerfällen und Netzkonfigurationen korrekt auslösen, und welche andererseits kompakt und kostengünstig zu realisieren ist.

## Patentansprüche

1. Stromversorgung (1, 301), insbesondere eine Niederspannungsstromversorgung, mit einem Netzanschluss (2.1) zum Anschliessen an ein Stromversorgungsnetz und einem Verbraucheranschluss (2.2) zum Anschliessen eines elektrischen Verbrauchers, wobei die Stromversorgung (1, 301) einen ersten Fehlerstromschutzschalter (7.1, 307) umfasst sowie eine vom Netzanschluss (2.1) aus gesehen zum ersten Fehlerstromschutzschalter (7.1, 307) führende erste elektrische Verbindung (9.1) mit einem Neutralleiter (4) und wenigstens einem Phasenleiter (5) aufweist, **dadurch gekennzeichnet, dass** die Stromversorgung (1, 301) eine kapazitive Brücke (10.1, 310) umfasst zur Herstellung einer kapazitiven Verbindung zwischen dem Neutralleiter (4) der ersten elektrischen Verbindung (9.1) und einem Erdpotential (3) der Stromversorgung (1,301).

2. Stromversorgung (1) nach Anspruch 1, wobei sie eine unterbrechungsfreie Stromversorgung, USV (6) umfasst und der erste Fehlerstromschutzschalter (7.1) auf einer Sekundärseite der USV (6) angeordnet ist.

3. Stromversorgung (1) nach Anspruch 2, wobei sie zwischen dem Netzanschluss (2.1) und der USV (6) eine zweite elektrische Verbindung (9.2) mit einem Neutralleiter (4) und wenigstens einem Phasenleiter (5) aufweist, wobei die Stromversorgung (1) zur Herstellung einer kapazitiven Verbindung zwischen dem Neutralleiter (4) der zweiten elektrischen Verbindung (9.2) und dem Erdpotential (3) der Stromversorgung eine zweite kapazitive Brücke (10.2) umfasst, wobei die Stromversorgung (1) insbesondere einen auf einer Primärseite der USV (6) zwischen der zweiten kapazitiven Brücke (10.2) und der USV (6) angeordneten, zweiten Fehlerstromschutzschalter (7.2) umfasst.

4. Stromversorgung nach einem der Ansprüche 1 bis 3, wobei jede Brücke eine Kapazität im Bereich von 0.1 µF bis 25 µF, insbesondere im Bereich von 0.33 µF bis 3 µF, aufweist.

5. Stromversorgung nach einem der Ansprüche 1 bis 4, wobei jede Brücke einen Schalter (126.1, 128) umfasst, mit welchem die kapazitive Verbindung herstellbar bzw. trennbar ist.

6. Stromversorgung nach Anspruch 5, wobei die Stromversorgung eine Steuerung (11) umfasst zur Steuerung des Schalters (126.1, 128) jeder Brücke, wobei die Steuerung (11) insbesondere derart ausgebildet ist, dass die Schalter (126.1, 128) in Abhängigkeit einer Netzstruktur der Stromversorgung in einem Eingangsbereich der Stromversorgung steuerbar sind.

7. Stromversorgung nach Anspruch 6, wobei die kapazitive Verbindung trennbar ist, wenn die Stromversorgung im Eingangsbereich eine TN Netzstruktur aufweist.

8. Stromversorgung nach Anspruch 6, wobei die kapazitive Verbindung herstellbar ist, wenn die Stromversorgung im Eingangsbereich eine IT Netzstruktur aufweist.

9. Stromversorgung nach Anspruch 6, wobei die kapazitive Verbindung bei einem Ausfall des Stromversorgungsnetzes herstellbar ist.

10. Stromversorgung nach einem der Ansprüche 1 bis 9, wobei sie wenigstens eine Überstromschutzeinrichtung (8.1, 8.2) umfasst, welche vom Netzanschluss her gesehen jeweils vor einem Fehlerstromschutzschalter angeordnet ist und wobei die Überstromschutzeinrichtung und der jeweilige Fehlerstromschutzschalter vorzugsweise als Einheit (107, 307) ausgebildet sind.

11. Stromversorgung nach einem der Ansprüche 1 bis 10, wobei sie eine zwischen dem Netzanschluss (2.1) und dem Fehlerstromschutzschalter (7.2, 307) angeordnete Überspannungsschutzeinrichtung (12) umfasst.

12. Stromversorgung nach einem der Ansprüche 1 bis 11, wobei das Erdpotential (3) vom Netzanschluss (2.1) unterbrechungsfrei bis zum Verbraucheranschluss (2.2) durchgeschleift ist.

13. Stromversorgung nach einem der Ansprüche 1 bis 12, wobei sie als Stromversorgung zum Anschliessen an ein Niederspannungs-Stromversorgungsnetz ausgebildet ist.

14. Stromversorgung nach einem der Ansprüche 1 bis 13, wobei sie eine Einstellvorrichtung (125) zum wahlweisen Einstellen einer Netzstruktur im Eingangsbereich der Stromversorgung umfasst.

## Claims

1. Power supply (1, 301), in particular a low-voltage power supply, comprising a grid connection (2.1) for connection to a power supply grid and a consumer connection (2.2) for connection of an electrical consumer, wherein the power supply (1, 301) comprises a first fault current circuit breaker (7.1, 307) and has a first electrical connection (9.1), which leads from the grid connection (2.1) to the first fault current circuit breaker (7.1, 307) and has a neutral conductor (4), and at least one phase conductor (5), **characterized in that** the power supply (1, 301) comprises a capacitive bridge (10.1, 310) for establishing a capacitive connection between the neutral conductor (4) of the first electrical connection (9.1) and an earth potential (3) of the power supply (1, 301).

2. Power supply (1) according to Claim 1, wherein said power supply comprises an uninterruptible power supply, UPS, (6) and the first fault current circuit breaker (7.1) is arranged on a secondary side of the UPS (6).

3. Power supply (1) according to Claim 2, wherein said power supply has a second electrical connection (9.2) having a neutral conductor (4) and at least one phase conductor (5) between the grid connection (2.1) and the UPS (6), wherein the power supply (1) comprises a second capacitive bridge (10.2) for establishing a capacitive connection between the neutral conductor (4) of the second electrical connection (9.2) and the earth potential (3) of the power supply, wherein the power supply (1) comprises in particular a second fault current circuit breaker (7.2), which is arranged on a primary side of the UPS (6) between the second capacitive bridge (10.2) and the UPS (6).

4. Power supply according to one of Claims 1 to 3, wherein each bridge has a capacitance in the range of from 0.1 µF to 25 µF, in particular in the range of from 0.33 µF to 3 µF.

5. Power supply according to one of Claims 1 to 4, wherein each bridge comprises a switch (126.1, 128), with which the capacitive connection can be established or disconnected.

6. Power supply according to Claim 5, wherein the power supply comprises a controller (11) for controlling the switch (126.1, 128) of each bridge, wherein the controller (11) is in particular designed in such a way that the switches (126.1, 128) are controllable depending on a network structure of the power supply in an input range of the power supply.

7. Power supply according to Claim 6, wherein the capacitive connection is disconnectable when the power supply has a TN network structure in the input range.

8. Power supply according to Claim 6, wherein the capacitive connection is establishable when the power supply has an IT network structure in the input range.

9. Power supply according to Claim 6, wherein the capacitive connection is establishable in the event of a failure of the power supply grid.

10. Power supply according to one of Claims 1 to 9, wherein said power supply comprises at least one overcurrent protection device (8.1, 8.2), which is arranged in each case in front of a fault current circuit breaker, when viewed from the grid connection, and wherein the overcurrent protection device and the respective fault current circuit breaker are preferably formed as a unit (107, 307) .

11. Power supply according to one of Claims 1 to 10, wherein said power supply comprises an overvoltage protection device (12) arranged between the grid connection (2.1) and the fault current circuit breaker (7.2, 307).

12. Power supply according to one of Claims 1 to 11, wherein the earth potential (3) is connected from the grid connection (2.1) without any interruptions up to the consumer connection (2.2).

13. Power supply according to one of Claims 1 to 12, wherein said power supply is in the form of a power supply for connection to a low-voltage power supply grid.

14. Power supply according to one of Claims 1 to 13, wherein said power supply comprises a setting apparatus (125) for optionally setting a network structure in the input range of the power supply.

## Revendications

1. Alimentation électrique (1, 301), notamment alimentation électrique basse tension, avec un raccordement au réseau (2.1) pour le raccordement à un réseau d'alimentation électrique et un raccordement de récepteur (2.2) pour le raccordement d'un récepteur électrique, l'alimentation électrique (1, 301) comprenant un premier commutateur de protection contre les anomalies (7.1, 307) ainsi qu'une première liaison électrique (9.1) conduisant, en partant du raccordement au réseau (2.1), au premier commutateur de projection contre les anomalies (7.1, 307) avec un conducteur neutre (4) et au moins un conducteur de phase (5), **caractérisée en ce que** l'alimentation électrique (1, 301) comprend un pont capacitif (10.1, 310) destiné à établir une liaison capacitive entre le conducteur neutre (4) de la première liaison électrique (9.1) et un potentiel de terre (3) de l'alimentation électrique (1, 301).

2. Alimentation électrique (1) selon la revendication 1, celle-ci comprenant une alimentation électrique sans interruption, ASI, (6) et le premier commutateur de protection contre les anomalies (7.1) étant disposé sur un côté secondaire de ladite ASI(6).

3. Alimentation électrique (1) selon la revendication 2, celle-ci comportant entre le raccordement au réseau (2.1) et l'ASI (6) une deuxième liaison électrique (9.2) avec un conducteur neutre (4) et au moins un conducteur de phase (5), l'alimentation électrique (1) comprenant un deuxième pont capacitif (10.2) pour établir une liaison capacitive entre le conducteur neutre (4) de la deuxième liaison électrique (9.2) et le potentiel de terre (3) de l'alimentation électrique, l'alimentation électrique (1) comprenant notamment, sur un côté principal de l'ASI(6), un deuxième commutateur de protection contre les anomalies (7.2) disposé entre le deuxième pont capacitif (10.2) et l'ASI(6).

4. Alimentation électrique selon l'une quelconque des revendications 1 à 3, chaque pont comportant une capacité dans la plage de 0,1 µF à 25 µF, notamment dans la plage de 0,33 µF à 3 µF.

5. Alimentation électrique selon l'une quelconque des revendications 1 à 4, chaque pont comprenant un commutateur (126.1, 128) à l'aide duquel la liaison capacitive peut être établie et/ou séparée.

6. Alimentation électrique selon la revendication 5, l'alimentation électrique comprenant un élément de commande (11) pour commander le commutateur (126.1, 128) de chaque pont, l'élément de commande (11) étant notamment réalisé de telle sorte que le commutateur (126.1, 128) peut être commandé en fonction d'une structure réticulaire de l'alimentation électrique dans une zone d'entrée de l'alimentation électrique.

7. Alimentation électrique selon la revendication 6, la liaison capacitive pouvant être séparée lorsque l'alimentation électrique comporte une structure réticulaire TN dans la zone d'entrée.

8. Alimentation électrique selon la revendication 6, la liaison capacitive pouvant être établie lorsque l'alimentation électrique comporte une structure réticulaire IT dans la zone d'entrée,

9. Alimentation électrique selon la revendication 6, la liaison capacitive pouvant être établie en cas de panne du réseau d'alimentation électrique.

10. Alimentation électrique selon l'une quelconque des revendications 1 à 9, celle-ci comprenant au moins un dispositif de protection contre les surtensions (8.1, 8.2) disposé, vu depuis le raccordement au réseau, respectivement devant un commutateur de protection contre les anomalies et le dispositif de protection contre les surtensions et le commutateur de protection contre les anomalies respectif prenant de préférence la forme d'une unité (107, 307).

11. Alimentation électrique selon l'une quelconque des revendications 1 à 10, celle-ci comprenant un dispositif de protection contre les surtensions (12) disposé entre le raccordement au réseau (2.1) et le commutateur de protection contre les anomalies (7.2, 307).

12. Alimentation électrique selon l'une quelconque des revendications 1 à 11, le potentiel de terre (3) passant sans interruption du raccordement au réseau (2.1) au raccordement de récepteur (2.2).

13. Alimentation électrique selon l'une quelconque des revendications 1 à 12, celle-ci prenant la forme d'une alimentation électrique prévue pour le raccordement à un réseau d'alimentation électrique en sous-tension.

14. Alimentation électrique selon l'une quelconque des revendications 1 à 13, celle-ci comprenant un dispositif de réglage (125) permettant de régler au choix une structure réticulaire dans la zone d'entrée de l'alimentation électrique.
